# EUROPEAN PATENT SPECIFICATION

(11) **EP 3 310 024 B1**
(45) Date of publication and mention of the grant of the patent: **09.10.2019**
(21) Application number: 16306351.4
(22) Date of filing: 13.10.2016
(51) Int. Cl.: H04L 29/08, G06T 19/00, G06F 9/44

(54) **PROVIDING USER ACCESS TO REMOTE DEVICES**
BEREITSTELLUNG VON BENUTZERZUGANG ZU ENTFERNTEN VORRICHTUNGEN
ÉTABLISSEMENT D'ACCÈS D'UTILISATEUR À DES DISPOSITIFS DISTANTS

(43) Date of publication of application: 18.04.2018
(73) Proprietor: Alcatel Lucent, 91620 Nozay (FR)
(72) Inventor: BORAN, Aidan, Dublin, 15 (IE); MATHUR, Akhil, DUBLIN, 15 (IE)
(74) Representative: Script IP Limited

(56) References cited:
- US-A1- 2011 265 003
- US-A1- 2014 049 558
- US-B2- 7 920 071

## Description

### FIELD OF THE INVENTION

The field of invention relates to providing user access to devices deployed in homes, businesses, urban spaces and other areas.

### BACKGROUND

With the growing industry focus on Internet of Things, it is expected that an increasing number of wireless loT sensors will be deployed in homes, enterprises and urban spaces in the near future. These sensors collect data (e.g. noise, temperature) about the surroundings and share it with a cloud backend, a home gateway or peer sensors in the local network, in order to provide various services to the end-users.

While the rapidly reducing manufacturing costs of sensors and devices is expected to fuel the adoption of IoT technologies, the end user experience when using these devices is critical to ensure sustained usage. Currently there is a lack of immersive solutions to interact with IOT/sensor devices.

Furthermore, sensor and IOT devices tend to be physically small and have very constrained processors and memory. This makes it difficult to provide engaging user interfaces to allow the end user to interact with the device. Users typically need to interact with the device (for example in the home or enterprise) for initial setup of the device, for ongoing maintenance and sensor data access (i.e. reading the sensor values).

US7920071 discloses a remote control system for an unmanned vehicle which uses augmented reality system wherein graphics are superimposed on the realtime view and comprise a displayed control.

US2014/0049558 discloses a see through display (glasses) worn by a user and through which the user may view a control device. When the user's gaze falls on the control device the glasses display one or more virtual objects in the form of information pertaining to one or more functions of the control device.

US2011/0265003 discloses an accessory device that can display a control screen for a media player and which can transmit to the media player control signals input on the accessory device.

It would be desirable to be able to provide access to these devices in an engaging and user friendly manner.

### SUMMARY

A first aspect of the present invention provides a method performed at a user device of providing user access to a remote device, said method comprising: detecting said remote device by receiving a signal from said remote device; identifying at least one characteristic of said detected remote device; generating and transmitting an access signal for accessing data from said remote device; generating and displaying an interface in accordance with said identified at least one characteristic of said remote device; wherein said steps of detecting and identifying said remote device comprise receiving and analysing a reflected electromagnetic signal from said remote device and said step of identifying at least one characteristic of said remote device comprises performing pattern matching of said reflected electromagnetic signal with patterns stored in association with remote device identifying data.

The inventors of the present invention recognised that with the increasing number of "smart" devices and Internet of Things loT sensors being deployed, the provision of individual interfaces to retrieve data and/or control the devices not only increases the cost of the devices but also often fails to provide a satisfactory user experience as the interfaces are necessarily both simple and small, in order to save both power and hardware costs. Furthermore, as the number of devices increases the number of different interfaces may also increase, which in turn provides its own challenges and inconveniences for a user to both understand and interact with. These problems have been addressed by the inventors by providing user access to different remote devices via one user device.

It should be noted that a remote device is any device that is separate from, independent of or detached from the user device, generally the remote device will be a sensor or IOT device.

Access to the device is provided by a series of steps. Initially the user device detects the presence of one or more remote devices by scanning for signals. The signal may be an active signal transmitted or broadcast by the device or it may simply be a signal that the device has reflected such as a reflected visible light signal.

At least one characteristic of the device is identified from this signal. This is done by comparing the signal with a database of remote devices either stored locally or on the cloud. A signal for accessing data from the remote device is generated and transmitted and an interface that is appropriate to the identified characteristic(s) of the device is also generated and displayed. These steps may be performed in any order depending on the device. In this way user access to the device is provided and an interface that is relevant to the device but has been generated by the user device and as such may have a format that the user is used to is provided. Furthermore, the interface is on the user device and as such is not constrained by the size and power capabilities of the remote device. The user device may be a smart phone or tablet.

A generic way of being able to detect the device is to detect it using electromagnetic signals reflected from the remote device, generally visible light signals that can be detected by a camera on the user device and analysed to determine the identity of the device.

One way of identifying the device may be to perform pattern matching which may include comparing an image of the device with a database of devices either stored on the user device or remotely in the cloud. Such pattern recognition may involve some machine learning and would allow the method to identify many different types of devices. Alternatively, the remote devices may comprise or be retro-fitted with coding tags, such tags or labels having a code identifying the device and/or identifying characteristics of the device. The use of codes allows for high quality information regarding the device to be simply obtained but requires the devices to be fitted with such codes. The codes may be barcodes or Q codes or any other machine readable code.

In some embodiments, said remote device identifying data identifies characteristics of said remote device, while in other embodiments the remote device identifying data identifies the device and the characteristics are identified from information stored for said device, in some cases on a database on the local device while in others the information may be obtained from a remote database.

In some embodiments, the method further comprises an initial step comprising: displaying a camera view of an area around a user; and wherein said step of detecting said remote device comprises detecting said remote device within said displayed area; and said step of displaying said interface comprises displaying said interface overlying a portion of said displayed area.

In some cases the user device displays a camera view of an area around the user and the step of detecting the remote device occurs within an area of that camera view, the displaying of the interface comprises displaying the interface overlying a portion of the displayed area. In effect augmented reality techniques are used so that a camera display of an area is shown to the user and an interface is generated and displayed overlying the displayed area. In this regard, the area contains the remote device which has been detected and the interface may overlie that remote device enabling the user to associate the two and communicate with the device in a simple and intuitive manner.

The step of detecting may be a visual detecting step whereby the camera signal is analysed by the user device. This may be done using pattern recognition techniques to identify the remote device perhaps by its shape or perhaps by some identifying code on the device such as a Q code or a barcode.

In some embodiments, in response to said identifying step identifying said remote device as comprising wireless communication capabilities compatible with said user device, said step of generating said access signal comprises generating a wireless access signal configured to be compatible with said identified wireless communication capabilities.

The step of identifying the remote device may identify its wireless communication capabilities and where the user device has compatible capabilities the generated wireless access signal can be configured to be compatible with these allowing access to the remote device.

In some embodiments, in response to said wireless communication capabilities being identified as having device pairing capabilities, said step of generating said access signal comprises generating a pairing signal for pairing with said remote device.

Where the device has device pairing capabilities compatible with the user device then the user device may pair with the remote device allowing for enhanced communication between the two devices and improved exchange of data and/or control signals.

In some embodiments, said step of generating said interface comprises generating said interface to comprise at least one user input in response to said identified characteristics comprising control circuitry for receiving control signals.

In some embodiments, the interface may comprise an interface for displaying data which is retrieved from the remote device, and/or it may comprise some user input for inputting a user control signal. In cases where the device is controllable and configured to receive control signals, then the interface can be generated to display this.

The concept of virtual controls allows different functionality to be provided to the user of the remote device. Embodiments can support a wide range of functionalities by overlaying different virtual controls. Simple user control inputs consist of a signal to request the viewing of the sensor/IOT device data, while more complex user controls can provide device, service and customer experience management. Thus, inputs for retrieving configuration parameters that can then be updated may be available. Furthermore, as the interface is generated and displayed at the user device it may include the display of hints/tips or instructional procedures on how to implement the available control procedures.

In some embodiments, in response to detection of a user interacting with said displayed at least one user input said step of generating said access signal comprises generating a control signal in accordance with said user input.

Where the interface comprises at least one user input then the user device will also have means of detecting the user interacting with the user input(s) perhaps by use of a touch screen and will generate a control signal in accordance with the detected user interaction which will then be transmitted to the remote device. In this way, remote devices can be controlled without the need to have their own interfaces, which interfaces add to the cost of the devices.

In some embodiments, in response to said remote device being identified as comprising a sensor, said step of generating said access signal comprises generating a signal querying sensor readings from said sensor, and said step of displaying said interface comprises displaying said received sensor readings within said interface.

In some cases, the remote device will be a sensor for sensing particular signals such as the temperature and humidity of the room, or the amount of electricity being used and when the remote device has been identified as being such a sensor, an access signal will be generated as a signal querying the sensor readings and the interface will comprise a display that displays sensor readings received from the sensor.

In this way the user device can be used to both detect and identify remote devices within the surroundings of the user and to retrieve readings from them and display them in a format that is both familiar to the user and easy to understand. Furthermore, different remote devices, potentially from different manufacturers located around a user can be detected and identified in a straightforward manner and the user can interact with such devices without the need to have specialised knowledge of these devices or the requirement to locate details regarding these devices in either a handbook or via a remote database. Any such information is automatically located by the method according to the embodiment following identification of characteristics of the device and is displayed to the user in a user friendly manner.

In some embodiments, where said identifying step identifies said remote device as having communication capabilities via an associated connected device, said step of transmitting said access signal comprises transmitting said access signal via said associated connected device.

In some cases, the remote device may not have wireless capabilities itself but may be wired to a further device that does have such capabilities. In such a case when the device has been identified as such, a step of transmitting the access signal comprises transmitting it via the associated connected device. In this way, remote devices without their own wireless communication capabilities can still be accessed.

In some embodiments, said identifying step identifies said remote device as not having wireless communication capabilities compatible with said user device, said method comprises determining a device with which said remote device is in communication and transmitting said access signal to said device.

Where the remote device is determined not to have wireless communication capabilities compatible with the user device then the user device will determine from the user characteristics whether there is a further device that the remote device communicates with and sends data to. This may be a backend system that manages that and other sensors. In such a case the user device will transmit the access signal towards this further device and retrieve the data from there.

A second aspect of the present invention comprises a portable device for providing user access to a remote device, said portable device comprising: a signal detector for detecting a signal from said remote device; identifying logic operable to identify at least one characteristic of said detected remote device; a signal generator and transmitter for generating and transmitting an access signal towards said remote device; an interface generator for generating an interface in accordance with said identified at least one characteristic of said remote device; and a display for displaying said interface.

In some embodiments, the portable device further comprises a camera; said display being configured to display an area around a user recorded by said camera; wherein said signal detector is configured to detect a signal from a remote device within said displayed area; said display being further configured to display said interface overlying a portion of said displayed area.

Where the portable device comprises a camera, the user device being for example a smartphone or tablet, then the display can display an area, the camera view, around the user and the detection of the device can occur within this area. Where the detection is by reflected signal, then this signal is detected by the camera and can be analysed by circuitry within the user device. Where a remote device such as a sensor is detected in this area, an interface can be displayed overlying the displayed area enabling easy and intuitive interaction with the user. Furthermore, the display may place the interface overlying the remote device making it is a simple and intuitive matter for the user to associate the interface with the sensor.

In some embodiments, said display comprises a touch sensitive screen, and said interface comprises at least one user input displayed on said touch sensitive screen.

Where the interface comprises at least one user input then some means of detecting the user interacting with this input is required. In some embodiments this involves using a touch sensitive screen such that the device can detect a user interacting with a displayed user input. In this regard the screens of most smartphones are touch sensitive, so displaying an interface on the camera view of the surrounding area on such a screen, will enable a user interacting with a displayed user input to be detected in a straightforward manner.

A third aspect of the present invention provides a computer program which when executed by a computer is operable to control said computer to perform steps in a method according to a first aspect of the invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a flow diagram showing steps in a method according to an embodiment;
Figure 2 schematically illustrates a smart phone interacting with a sensor according to an embodiment;
Figure 3 schematically illustrates an example of a remote device that is detected and for which an interface is generated;
Figure 4 shows examples of generated interfaces; and
Figure 5 show steps in a method according to a further embodiment.

### DESCRIPTION OF THE EMBODIMENTS

Before discussing the embodiments in any more detail, first an overview will be provided.

A technique of accessing separate or remote devices via a single user device is provided. The user device may be a user smartphone or tablet that is configured to be able to detect and identify a characteristic of different types of remote devices such as IoT sensors, controllers and smart meters. The user device having identified a characteristic of the detected device displays an interface for communicating with the remote device and generates an access signal. In this way the user can interact with different devices via a single device and via an interface which is generated by that device and as such may be familiar and user friendly for that user.

In preferred embodiments, Augmented Reality AR features are used to provide the interface overlying a display of the surrounding area containing the remote device. In some cases these techniques are combined with a peer to peer P2P wireless dialog. In this way user access to remote device is provided via an interface which is generated on the user device and is displayed in relation to the detected device allowing the two to be easily associated with each other by the user, and giving a new level of user experience.

In some embodiments applications downloaded onto a user's phone allows the user to point the phone's camera at the Sensor/IOT device whereupon the Augmented Reality enabled smart phone camera application takes over detects and identifies the IOT device and provides virtual controls that are overlaid on the smartphone camera view to allow the user to interact with the IOT device. The concept of virtual controls allows different functionality to be provided to the user of the sensor/IOT device. The approach can support a wide range of functionalities by overlaying different virtual controls. Simple uses consist of viewing of the sensor/IOT device data and parameters while more complex uses can provide device, service and customer experience management. Device & Service management covers the configuration of parameters such as reporting interval, sleep modes. Customer experience management covers operations such as overlaying hints/tips on the device or instructional procedures for diagnosis or debug.

Different embodiments provide a number of unique features as outlined below.
- improves the user experience by providing a concrete and tangible connection between the end user and the device. It also encourages environment exploration using the camera to find and interact with IOT devices by panning the camera view (e.g. room wide view). This feature can be used to augment the view with a camera overlay which illustrates the sensing range of the IOT/ Sensor device.
- From a customer service view point, for example in an enterprise setting, additional diagnostic or service support operations can be added dynamically. This could allow both a) better placement of devices by advising the user about when and where to place the IOT/ Sensor device and b) advise of overlaps with sensor/ IOT devices in the area.
- The approach effectively uses the screen and touch interface of the users smart phone as an extension of the IOT device - thus simplifying the IOT device hardware while preserving a high quality user experience.

In this regard, providing an engaging user experience when interacting with consumer devices is an important factor in ensuring continued use of the device and the retention of the customer.

Existing conventional solutions to this issue fall into two broad categories (a) Mobile Application interfaces and (b) zero (or one) touch devices.

Current mobile application based approaches fall short as they typically provide cloud connected apps which requires the user to enter various technical description fields without a clear or tangible connection to the physical device. Existing augmented reality applications tend to overlay web/ cloud information on the current scene and do not provide a way of accessing the device or a way to mix both local and cloud based information and context.

It is expected that the home and enterprise of the future could contain many different device types - typically with different user, device, service interfaces. This will significantly complicate the job the end user must perform when trying to provide a balance between the coverage of the sensors/ IOT devices and the quality of the data collected. Providing visual guidance via the interface in the setup and management steps can provide for improved and long term user interactions.

Devices like Nest home thermostat follow a zero touch approach. These devices attempt to try to learn the optimal behaviour of the user and then to adjust automatically to suit that behaviour. Since the Nest is a mains powered device - it can easily support a high definition screen without impact on battery life. For battery powered devices, this is not a viable option. Furthermore, providing such a high definition screen adds significantly to the cost of the device, which again is not a viable option for simpler cheaper devices.

Embodiments seek to address these issues by providing access to the devices via a single user device such as a smartphone. In preferred embodiments, this user device provides an Augmented Reality (AR) application which allows the end user to interface with an IOT/Sensor device using his/her smartphone. The AR application can mix local and cloud based content to access information regarding the device and provide improved customer experience. Augmented Reality (AR) is a technology that allows the user to use a smartphone camera to recognise physical things in the environment. AR typically applies standard object or pattern recognition techniques and then allows video overlays to be applied to the current camera view.

In embodiments once the object has been identified by the camera, application software (described below) overlays the live camera view with user interface controls that are relevant to the sensor/IOT device.

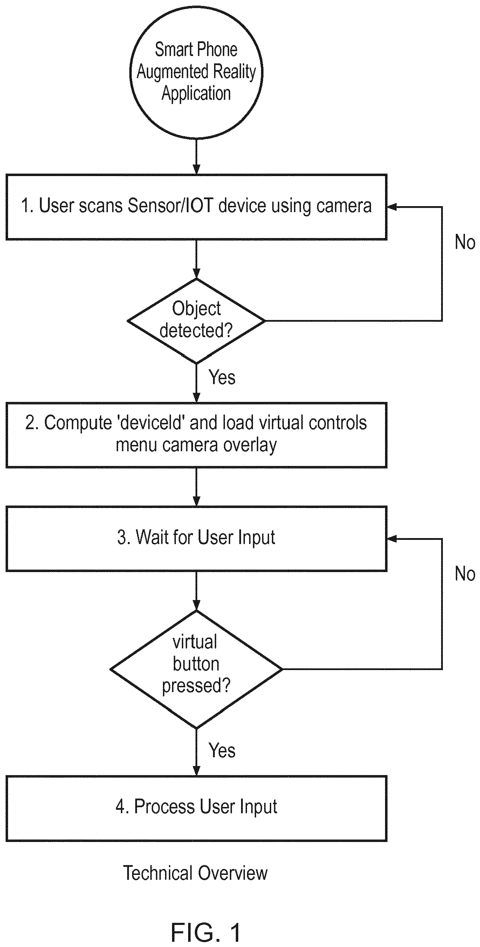

Figure 1 shows a flow diagram illustrating steps performed in a method according to an embodiment. These steps may be performed on a user smartphone under control of software downloaded on to the phone.

Initially the user scans the surrounding area using the camera on the smartphone. Analysis software on the phone determines whether a sensor has been detected in the scanned area and where yes the sensor is identified. This may be by using pattern recognition techniques and comparing the patterns with a database or it may be that the sensor is fitted with a data tag with some machine readable code identifying the sensor.

In any case once the sensor has been identified or at least some characteristics of the sensor have been identified then an interface applicable to the sensor is generated and displayed as an overlay on the camera view of the sensor. Where the interface is one with user input controls, then the smart phone waits for detection of a user interacting with the displayed controls, this may be detection of the user touching the screen which is a touch sensitive screen at the displayed input. When this is detected a signal is generated appropriate to the detected input, the signal is transmitted to the sensor which reacts accordingly.

Depending on the AR application programming environment used, a number of difference approaches are possible to data tag the sensor/ IOT device ranging from images, QR codes and bar codes. In most environments target images can be stored either on the smartphone application itself or on cloud storage. These approaches provide a large range of possible tags to identify devices. In the technical realisation detailed below, an image with a bar code has been used. The image comparison model is stored locally on the smartphone so no cloud connection is needed for the image recognition process.

The wireless capabilities of the sensor/IOT device provide a variety of options for how and what can be shown (overlaid) on the camera view. The different options are outlined below.

### a) Sensor/IOT devices with Wifi

The sensor/IOT device can provide either a P2P or other connection to the SmartPhone application. This can be achieved using connection oriented wifiDirect, or connectionless data muling approaches using 802.11 management packets (i.e. QOS, Probes). In the technical realisation below, 802.11 management probes are issued by the sensor/IOT device and used to render both live sensor data and configuration options.

If the sensor/IOT device does not support this type of P2P interaction, then the SmartPhone AR application can query cloud infrastructure to pull the latest sensor/IOT device data to the smartPhone AR application.

### b) Sensor/IOT devices with BluetoothLE® and NFC (near field communication)

This case is essentially the same as for the WiFi case. If both sensor/IOT device and SmartPhone supports the same wireless standard, then a P2P connection can be used. If there is a mismatch, then the SmartPhone AR application can revert to cloud backend to request sensor/IOT device data.

### c) Sensor/IOT devices with IOT wireless standards (e.g. SigFox, LoRa, ZigBee)

Since smartphones are unlikely to support these specialised standards, then the SmartPhone AR application can revert to cloud backend to request sensor/ IOT device data.

### d) Sensor/IOT device with no wireless capability.

It is assumed that these type of devices still have some wired connection to send and store sensor/IOT data to a central storage or management system. (For example, older building management systems using BacNet or ModBus). For these cases, the SmartPhone AR application must use its own wireless connection to query the backend systems to provide the relevant sensor/IOT device data.

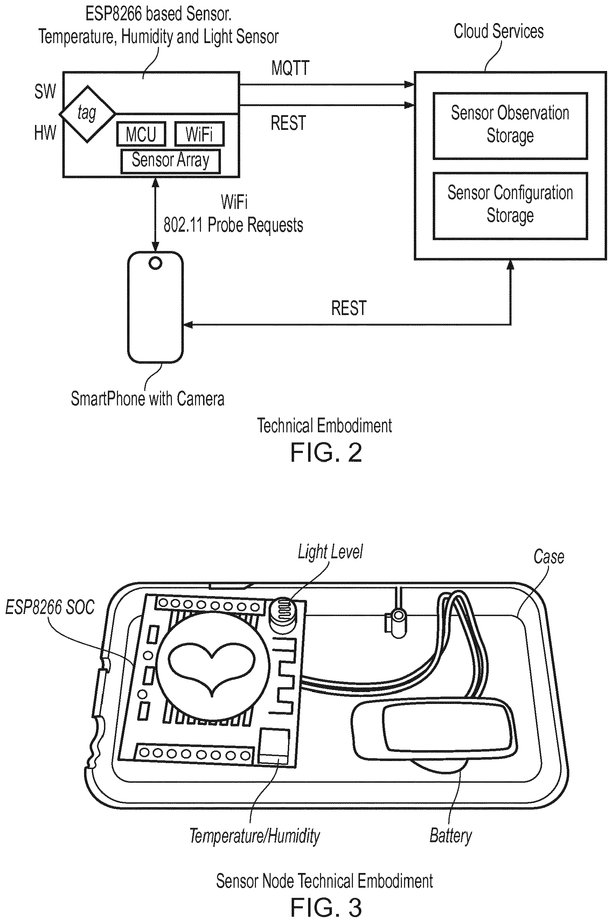

Figure 2 shows an embodiment where the remote device being queried is an ESP8266 System On Chip sensor node with temperature, humidity, Sound Level and Light sensors. This is a battery operated device that uses an onboard WiFi interface to send MQTT sensor data to a variety of cloud storage systems (e.g. ThingSpeak). The architecture of the system is shown in figure 2. Figure 3 schematically illustrates an example of such a remote device that is detected and for which an interface is generated

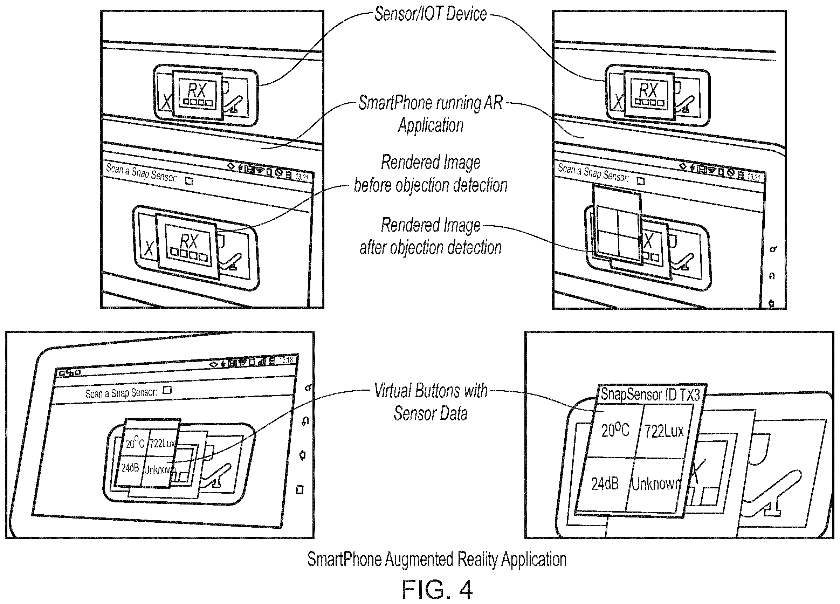

The system of figure 2 allows the user of the sensor to run a smart phone augmented reality application to scan a tag on the case of the sensor/IOT device. Once the tag has been detected by the AR application, the application issues a 802.11 Probe request to ask the sensor node to start issuing 802.11 Probe Responses with the sensor data encapsulated in the Probe Response user parameters. When the Smart Phone application receives the 802.11 Probe responses, it renders the sensor data as an overlay on the current camera view. A photo of the before and after views is show in figure 4.

This approach can be extended to add secure authentication between the sensor/IOT device, the smartPhone and Cloud. It is also possible to add configuration options to rendered view which execute actions on the node. In this regard when identifying the sensor the smartphone may also identify the cloud services with which it interacts. In this regard details of these may be stored with details of the sensor either in a database local to the user device or in a remote cloud based database. In either case the user device may access this information and then, in addition to generating and transmitting signals to directly access the device, it may also generate and transmit signals to the cloud services to access data concerning the sensor from there and in some cases may provide an interface allowing a user to view and update data such as configuration options stored on the node.

In this embodiment, any of the four tiles can be pressed.

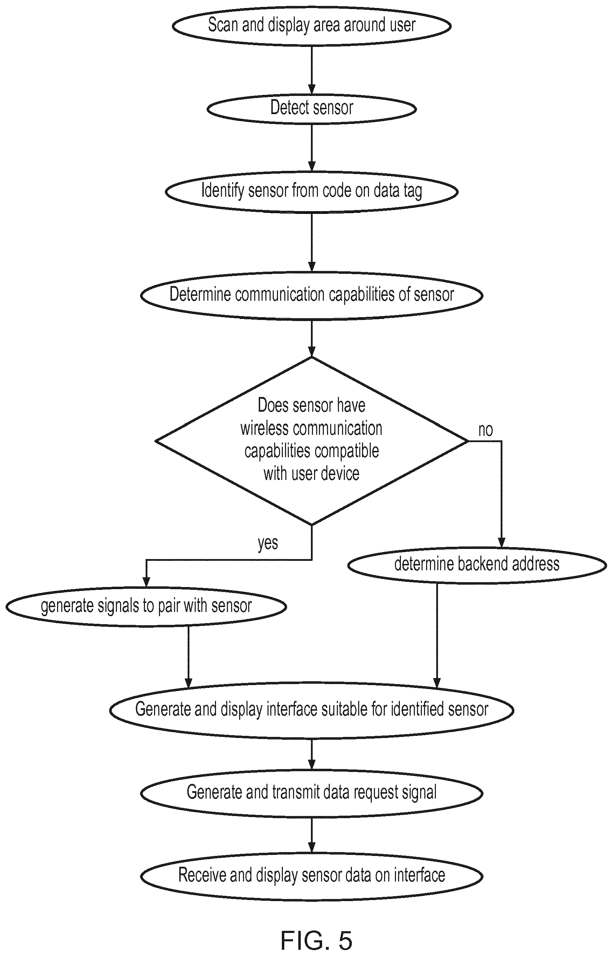

Figure 5 shows a flow diagram illustrating steps in a method according to a further embodiment. In this embodiment the smartphone initially scans and displays an area around the user and on detecting a sensor within that area identifies the sensor. In this example the identification is made from a code on a tag which the application on the smartphone compares with a set of codes that it has stored in a local database. From this information it can determine certain characteristics of the sensor, such as its communication capabilities. Where it determines that the communication capabilities are compatible with the user device it will pair with the sensor and can then send access signals directly to the sensor which may include data queries or control signals.

Where the user device determines that it is not compatible with the wireless capabilities of the sensor or where the sensor does not have such capabilities, it will determine a device that the sensor does communicate with, in this case a backend server and will send signals to this backend server to access data from the sensor via this device.

In either case, an interface is generated and displayed overlying the display of the sensor. The interface that is generated is appropriate to the sensor detected and identified. Once a signal has been sent requesting data either via the backend server or directly to the sensor, the device waits for a response which is received and includes data. The device then displays the data on the interface. In this way a user can access sensor data without requiring specialist knowledge of the sensor, and without the sensor needing its own interface.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A method performed at a user device of providing user access to a remote device, said method comprising:
detecting said remote device by receiving a signal from said remote device;
identifying at least one characteristic of said detected remote device;
generating and transmitting an access signal for accessing data from said remote device;
generating and displaying an interface in accordance with said identified at least one characteristic of said remote device; wherein
said steps of detecting and identifying said remote device comprise receiving and analysing a reflected electromagnetic signal from said remote device and
said step of identifying at least one characteristic of said remote device comprises performing pattern matching of said reflected electromagnetic signal with patterns stored in association with remote device identifying data.

2. A method according to claim 1, comprising an initial step of:
displaying a camera view of an area around a user; wherein
said step of detecting said remote device comprises detecting said remote device within said displayed area; and
said step of displaying said interface comprises displaying said interface overlying a portion of said displayed area.

3. A method according to any preceding claim, wherein in response to said identifying step identifying said remote device as comprising wireless communication capabilities compatible with said user device, said step of generating said access signal comprises generating a wireless access signal configured to be compatible with said identified wireless communication capabilities.

4. A method according to claim 3, wherein in response to said wireless communication capabilities being identified as having device pairing capabilities compatible with said user device, said step of generating said access signal comprises generating a pairing signal for pairing with said remote device.

5. A method according to any preceding claim, wherein said remote device identifying data identifies characteristics of said remote device.

6. A method according to any preceding claim, wherein in response to said identified characteristics comprising control circuitry for receiving control signals, said step of generating said interface comprises generating said interface to comprise at least one user input.

7. A method according to claim 6, wherein in response to detection of a user interacting with said displayed at least one user input said step of generating said access signal comprises generating a control signal in accordance with said user input.

8. A method according to any preceding claim, wherein in response to said remote device being identified as comprising a sensor, said step of generating said access signal comprises generating a signal querying sensor readings from said sensor, and said step of displaying said interface comprises displaying said received sensor readings within said interface.

9. A method according to any preceding claim, wherein where said identifying step identifies said remote device as not having wireless communication capabilities compatible with said user device, said method comprises determining a device with which said remote device is in communication and transmitting said access signal to said device.

10. A portable device for providing user access to a remote device, said portable device comprising:
a signal detector for detecting a signal from said remote device;
identifying logic operable to identify at least one characteristic of said detected remote device;
a signal generator and transmitter for generating and transmitting an access signal for accessing data from said remote device;
an interface generator for generating an interface in accordance with said identified at least one characteristic of said remote device; and
a display for displaying said interface; wherein
said signal detector is operable to receive a reflected electromagnetic signal from said remote device and
said identifying logic is operable to perform pattern matching of said reflected electromagnetic signal with patterns stored in association with remote device identifying data to identify said at least one characteristic of said remote device.

11. A portable device according to claim 10, further comprising:
a camera;
said display being configured to display an area around a user recorded by said camera; wherein
said signal detector is configured to detect a signal from a remote device within said displayed area;
said display being further configured to display said interface overlying a portion of said displayed area.

12. A portable device according to claim 10 or 11, wherein said display comprises a touch sensitive screen, and said interface comprises at least one user input displayed on said touch sensitive screen.

13. A computer program which when executed by a computer is operable to control said computer to perform steps in a method according to any one of claims 1 to 9.

## Patentansprüche

1. Verfahren, das an einer Benutzervorrichtung ausgeführt wird, zum Bereitstellen von Benutzerzugang zu einer entfernten Vorrichtung, das Verfahren aufweisend:
Erkennen der entfernten Vorrichtung durch Empfangen eines Signals von der entfernten Vorrichtung;
Identifizieren von mindestens einem Kennzeichen der erkannten entfernten Vorrichtung;
Erzeugen und Übertragen eines Zugangssignals für Zugangsdaten von der entfernten Vorrichtung;
Erzeugen und Anzeigen einer Oberfläche gemäß dem identifizierten, mindestens einem Kennzeichen der entfernten Vorrichtung; wobei
die Schritte des Erkennens und Identifizierens der entfernten Vorrichtung das Empfangen und Analysieren eines reflektierten elektromagnetischen Signals von der entfernten Vorrichtung aufweisen, und
der Schritt des Identifizierens von mindestens einem Kennzeichen der entfernten Vorrichtung das Ausführen von Musterabgleich des reflektierten elektromagnetischen Signals mit Mustern, die assoziiert mit Identifizierungsdaten der entfernten Vorrichtung gespeichert sind, aufweist.

2. Verfahren nach Anspruch 1, aufweisend folgenden Anfangsschritt:
Anzeigen einer Kameraansicht eines Bereichs um den Benutzer herum; wobei
der Schritt des Erkennens der entfernten Vorrichtung das Erkennen der entfernten Vorrichtung innerhalb des angezeigten Bereichs aufweist; und
der Schritt des Anzeigens der Oberfläche das Anzeigen der Oberfläche, die einen Abschnitt des angezeigten Bereichs überlagert, aufweist.

3. Verfahren nach einem der vorhergehenden Ansprüche, wobei in Reaktion auf den Identifizierungsschritt, der die entfernte Vorrichtung als drahtlose Kommunikationsfähigkeiten, die mit der Benutzervorrichtung kompatibel sind, aufweisend identifiziert, der Schritt des Erzeugens des Zugangssignals das Erzeugen eines drahtlosen Zugangssignals aufweist, das dazu konfiguriert ist, mit den identifizierten drahtlosen Kommunikationsfähigkeiten kompatibel zu sein.

4. Verfahren nach Anspruch 3, wobei in Reaktion darauf, dass die drahtlosen Kommunikationsfähigkeiten als Vorrichtungspaarungsfähigkeiten, die mit der Benutzervorrichtung kompatibel sind, aufweisend identifiziert werden, der Schritt des Erzeugens des Zugangssignals das Erzeugen eines Paarungssignals zur Paarung mit der entfernten Vorrichtung aufweist.

5. Verfahren nach einem der vorhergehenden Ansprüche, wobei die Identifizierungsdaten der entfernten Vorrichtung Kennzeichen der entfernten Vorrichtung identifizieren.

6. Verfahren nach einem der vorhergehenden Ansprüche, wobei in Reaktion darauf, dass die identifizierten Kennzeichen Steuerschaltungen zum Empfangen von Steuersignalen aufweisen, der Schritt des Erzeugens der Oberfläche das Erzeugen der Oberfläche zum Aufweisen von mindestens einer Benutzereingabe aufweist.

7. Verfahren nach Anspruch 6, wobei in Reaktion auf das Erkennen, dass ein Benutzer mit der angezeigten, mindestens einen Benutzereingabe interagiert, der Schritt des Erzeugens des Zugangssignals das Erzeugen eines Steuersignals gemäß der Benutzereingabe aufweist.

8. Verfahren nach einem der vorhergehenden Ansprüche, wobei in Reaktion darauf, dass die entfernte Vorrichtung als einen Sensor aufweisend identifiziert wird, der Schritt des Erzeugens des Zugangssignals das Erzeugen eines Signals aufweist, das Sensorablesungen vom Sensor abfragt, und der Schritt des Anzeigens der Oberfläche das Anzeigen der empfangenen Sensorablesungen innerhalb der Oberfläche aufweist.

9. Verfahren nach einem der vorhergehenden Ansprüche, wobei, wenn der Identifizierungsschritt die entfernte Vorrichtung als keine drahtlosen Kommunikationsfähigkeiten, die mit der Benutzervorrichtung kompatibel sind, aufweisend identifiziert, das Verfahren das Bestimmen einer Vorrichtung, mit der die entfernte Vorrichtung in Kommunikation steht, und das Übertragen des Zugangssignals an die Vorrichtung aufweist.

10. Tragbare Vorrichtung zum Bereitstellen von Benutzerzugang zu einer entfernten Vorrichtung, die tragbare Vorrichtung aufweisend:
einen Signaldetektor zum Erkennen eines Signals von der entfernten Vorrichtung;
Identifizierungslogik, die zum Identifizieren von mindestens einem Kennzeichen der erkannten entfernten Vorrichtung betriebsfähig ist;
einen Signalgenerator und -sender zum Erzeugen und Übertragen eines Zugangssignals zum Zugreifen auf Daten von der entfernten Vorrichtung;
einen Oberflächengenerator zum Erzeugen einer Oberfläche gemäß dem identifizierten, mindestens einen Kennzeichen der entfernten Vorrichtung; und
eine Anzeige zum Anzeigen der Oberfläche; wobei
der Signaldetektor zum Empfangen eines reflektierten elektromagnetischen Signals von der entfernten Vorrichtung betriebsfähig ist, und
die Identifizierungslogik zum Ausführen von Musterabgleich des reflektierten elektromagnetischen Signals mit Mustern, die assoziiert mit Identifizierungsdaten der entfernten Vorrichtung gespeichert sind, zum Identifizieren von mindestens einem Kennzeichen der entfernten Vorrichtung betriebsfähig ist.

11. Tragbare Vorrichtung nach Anspruch 10, ferner aufweisend:
eine Kamera;
wobei die Anzeige zum Anzeigen eines Bereichs um einen Benutzer herum konfiguriert ist, welcher durch die Kamera aufgezeichnet wird; wobei
der Signaldetektor zum Erkennen eines Signals von einer entfernten Vorrichtung innerhalb des angezeigten Bereichs konfiguriert ist;
die Anzeige ferner zum Anzeigen der Oberfläche, die einen Abschnitt des angezeigten Bereichs überlagert, konfiguriert ist.

12. Tragbare Vorrichtung nach einem der Ansprüche 10 oder 11, wobei die Anzeige einen berührungsempfindlichen Bildschirm aufweist und die Oberfläche mindestens eine Benutzereingabe aufweist, die auf dem berührungsempfindlichen Bildschirm angezeigt wird.

13. Computerprogramm, das, wenn es durch einen Computer ausgeführt wird, zum Steuern des Computers zum Ausführen von Schritten in einem Verfahren nach einem der Ansprüche 1 bis 9 betriebsfähig ist.

## Revendications

1. Procédé réalisé au niveau d'un dispositif utilisateur de fourniture d'un accès d'utilisateur à un dispositif distant, ledit procédé comprenant :
la détection dudit dispositif distant par réception d'un signal en provenance dudit dispositif distant ;
l'identification d'au moins une caractéristique dudit dispositif distant détecté ;
la génération et la transmission d'un signal d'accès pour accéder à des données à partir dudit dispositif distant ;
la génération et l'affichage d'une interface conformément à ladite ou lesdites caractéristiques identifiées dudit dispositif distant ; dans lequel
lesdites étapes de détection et d'identification dudit dispositif distant comprennent la réception et l'analyse d'un signal électromagnétique réfléchi en provenance dudit dispositif distant et
ladite étape d'identification d'au moins une caractéristique dudit dispositif distant comprend la réalisation d'un appariement de motifs dudit signal électromagnétique réfléchi avec des motifs stockés en association avec des données d'identification de dispositif distant.

2. Procédé selon la revendication 1, comprenant une étape initiale :
d'affichage d'une vue de caméra d'une zone autour d'un utilisateur ; dans lequel
ladite étape de détection dudit dispositif distant comprend la détection dudit dispositif distant à l'intérieur de ladite zone affichée ; et
ladite étape d'affichage de ladite interface comprend l'affichage de ladite interface recouvrant une partie de ladite zone affichée.

3. Procédé selon l'une quelconque des revendications précédentes, dans lequel, en réponse au fait que ladite étape d'identification identifie ledit dispositif distant comme comprenant des capacités de communication sans fil compatibles avec ledit dispositif utilisateur, ladite étape de génération dudit signal d'accès comprend la génération d'un signal d'accès sans fil configuré pour être compatible avec lesdites capacités de communication sans fil identifiées.

4. Procédé selon la revendication 3, dans lequel, en réponse au fait que lesdites capacités de communication sans fil sont identifiées comme ayant des capacités d'appariement de dispositif compatibles avec ledit dispositif utilisateur, ladite étape de génération dudit signal d'accès comprend la génération d'un signal d'appariement pour un appariement avec ledit dispositif distant.

5. Procédé selon l'une quelconque des revendications précédentes, dans lequel lesdites données d'identification de dispositif distant identifient des caractéristiques dudit dispositif distant.

6. Procédé selon l'une quelconque des revendications précédentes, dans lequel, en réponse au fait que lesdites caractéristiques identifiées comprennent un ensemble de circuits de commande pour recevoir des signaux de commande, ladite étape de génération de ladite interface comprend la génération de ladite interface pour comprendre au moins une entrée d'utilisateur.

7. Procédé selon la revendication 6, dans lequel, en réponse à la détection d'un utilisateur interagissant avec ladite ou lesdites entrées d'utilisateur affichées, ladite étape de génération dudit signal d'accès comprend la génération d'un signal de commande conformément à ladite entrée d'utilisateur.

8. Procédé selon l'une quelconque des revendications précédentes, dans lequel, en réponse au fait que ledit dispositif distant est identifié comme comprenant un capteur, ladite étape de génération dudit signal d'accès comprend la génération d'un signal demandant des lectures de capteur à partir dudit capteur, et ladite étape d'affichage de ladite interface comprend l'affichage desdites lectures de capteur reçues dans ladite interface.

9. Procédé selon l'une quelconque des revendications précédentes, lorsque ladite étape d'identification identifie ledit dispositif distant comme n'ayant pas de capacités de communication sans fil compatibles avec ledit dispositif utilisateur, ledit procédé comprenant la détermination d'un dispositif avec lequel un dispositif distant est en communication et la transmission dudit signal d'accès audit dispositif.

10. Dispositif portable pour fournir un accès d'utilisateur à un dispositif distant, ledit dispositif portable comprenant :
un détecteur de signal pour détecter un signal en provenance dudit dispositif distant ;
une logique d'identification permettant d'identifier au moins une caractéristique dudit dispositif distant détecté ;
un générateur et un émetteur de signal pour générer et émettre un signal d'accès pour accéder à des données à partir dudit dispositif distant ;
un générateur d'interface pour générer une interface conformément à ladite ou lesdites caractéristiques identifiées dudit dispositif distant ; et
un affichage pour afficher ladite interface ; dans lequel
ledit détecteur de signal permet de recevoir un signal électromagnétique réfléchi en provenance dudit dispositif distant et
ladite logique d'identification permet de réaliser un appariement de motifs dudit signal électromagnétique réfléchi avec des motifs stockés en association avec des données d'identification de dispositif distant pour identifier ladite ou lesdites caractéristiques dudit dispositif distant.

11. Dispositif portable selon la revendication 10, comprenant en outre :
une caméra ;
ledit affichage étant configuré pour afficher une zone autour d'un utilisateur enregistrée par ladite caméra ; dans lequel
ledit détecteur de signal est configuré pour détecter un signal en provenance d'un dispositif distant à l'intérieur de ladite zone affichée ;
ledit affichage étant configuré pour afficher ladite interface recouvrant une partie de ladite zone affichée.

12. Dispositif portable selon la revendication 10 ou 11, dans lequel ledit affichage comprend un écran tactile et ladite interface comprend au moins une entrée d'utilisateur affichée sur ledit écran tactile.

13. Programme d'ordinateur qui, lorsqu'il est exécuté par un ordinateur, permet de commander ledit ordinateur pour réaliser des étapes dans un procédé selon l'une quelconque des revendications 1 à 9.
